# EUROPÄISCHE PATENTSCHRIFT

(11) **EP 3 020 462 B1**
(45) Veröffentlichungstag und Bekanntmachung des Hinweises auf die Patenterteilung: **03.01.2018**
(21) Anmeldenummer: 14192779.8
(22) Anmeldetag: 12.11.2014
(51) Int. Cl.: B01D 46/00, B01D 46/10

(54) **System mit Filterrahmen und Halterahmen zur reversiblen Aufnahme des Filterrahmens mit Befestigungseinrichtung**
System comprising a filter frame and a supporting frame for the reversible mounting of the filter frame using securing means
Système, comprenant un cadre de filtre et un cadre support destiné à réceptionner de manière réversible le cadre de filtre avec un dispositif de fixation

(43) Veröffentlichungstag der Anmeldung: 18.05.2016
(73) Patentinhaber: TROX GmbH, 47506 Neukirchen-Vluyn (DE)
(72) Erfinder: Flinterhoff, Jörg, 47443 Moers (DE)
(74) Vertreter: Dr. Stark & Partner Patentanwälte mbB

(56) Entgegenhaltungen:
- WO-A2-2012/166509
- US-A- 2 771 155
- US-A- 3 360 910
- US-A- 4 243 486
- US-A- 6 117 202
- US-B1- 7 540 073

## Beschreibung

Die Erfindung betrifft ein System, umfassend einen Filterrahmen mit einem darin angeordneten Filterelement, einen Halterahmen zur reversiblen Aufnahme des Filterrahmens sowie zumindest zwei über den Umfang des Filterrahmens verteilt angeordnete Einrichtungen, die den Filterrahmen entgegen der Einführrichtung gegenüber dem Halterahmen fixieren, wobei der Halterahmen eine, insbesondere nach innen weisende, umlaufende Anlagefläche aufweist, an der der Filterrahmen im eingesetzten Zustand anliegt.

Derartige Systeme sind für die Montage in einer raumlufttechnischen Be- und Entlüftungsanlage in einem Gebäude bestimmt. Üblicherweise werden die Systeme in eine Raumdecke eingesetzt und über einen geeigneten Anschluss an einen gebäudeseitigen Lüftungskanal angeschlossen. Da das Filterelement beispielsweise im Fall einer Verunreinigung getauscht werden muss, ist dieses üblicherweise vom Raum frei zugänglich angeordnet. Zur Befestigung des Filterrahmens mit dem darin angeordneten Filterelement in dem Halterahmen ist an dem Filterahmen im Bereich zweier gegenüberliegender Seiten je eine Gewindestange vorgesehen. Über den Filterrahmen erstreckt sich eine Traverse, die im Bereich ihrer beiden Enden seitlich über den Filterrahmen übersteht. In jedem der beiden Überstände befindet sich jeweils eine Bohrung. Bei der Montage wird durch jede Bohrung jeweils eine der beiden Gewindestangen geführt und anschließend auf jede Gewindestange eine Mutter aufgedreht.

WO2012/166509A2 zeigt einen Filterrahmen für V-Filter, der auf einen Halterahmen durch mehrere drehbare Laschen werkzeuglos miteinander verbunden wird. Nachteilig hierbei ist, dass die sich über das Filterelement erstreckende Traverse beispielsweise die Abnahmeprüfung erschwert und behindert. So wird bei der Abnahmeprüfung das Filterelement mittels eines Scanners von der Raumseite her im eingebauten Zustand abgefahren. Im Bereich der Traverse ist jedoch ein problemloses Scannen nicht möglich.
Aufgabe der Erfindung ist es, die vorgenannten Nachteile zu vermeiden und ein System anzugeben, das die spätere Abnahme zum Zwecke der Feststellung von Leckagen eines bereits in dem Halterahmen montierten Filterelementes erleichtert, ohne dass der Montage- und/oder der Demontageaufwand des Filterrahmens in dem Halterahmen vergrößert wird.
Diese Aufgabe wird dadurch gelöst, dass wenigstens eine Einrichtung zumindest werkzeuglos zwischen einer Entnahmeposition und einer Fixierposition verlagerbar ist und dass bei Verlagerung der Einrichtung aus der Entnahmeposition in ihre Fixierposition der Filterrahmen durch die Einrichtung zunehmend in eine Einsatzposition gegen die Anlagefläche verlagert wird, wobei die Einrichtung für die werkzeuglose Betätigung mit Handhabungsmitteln versehen ist. Als Handhabungsmittel kann jede Einrichtung beispielsweise eine geeignete Form, eine besondere Ausgestaltung der Oberfläche, wie beispielsweise eine Riffelung, oder dergleichen, aufweisen.
Der Halterahmen kann beispielsweise direkt in einem Lüftungskanal oder aber in einem Gehäuse eingesetzt sein. Bei Einsatz in einem Gehäuse ist das Gehäuse dann mit zumindest einem Ende eines Lüftungskanals verbunden. Das Gehäuse bzw. der Lüftungskanal einerseits und der Halterahmen andererseits können einteilig, beispielsweise aus Metall, ausgebildet sein. Selbstverständlich können das Gehäuse bzw. der Lüftungskanal einerseits und der Halterahmen andererseits auch mehrteilig, insbesondere zweiteilig, ausgebildet sein. In diesem Fall ist der Halterahmen umfangsseitig gegenüber dem Gehäuse bzw. dem Lüftungskanal abgedichtet und durch eine geeignete Maßnahme, wie beispielsweise Verschrauben, gegenüber dem Gehäuse bzw. dem Lüftungskanal fixiert.

Üblicherweise stellen der Filterrahmen und das darin eingesetzte Filterelement eine Einheit dar, die dann beispielsweise bei einer Verschmutzung in ihrer Gesamtheit getauscht wird. Es ist aber auch durchaus möglich, dass der Filterrahmen und das Filterelement voneinander trennbar sind. Dann wird bei Verschmutzung des Filterelementes lediglich das verschmutzte Filterelement aus dem Filterrahmen entfernt und durch ein sauberes Filterelement ersetzt.

Als Filterelement kann beispielsweise ein Taschen- oder Beutelfilter oder sonstiger Filter vorgesehen sein. Sofern das Filterelement höchsten Anforderungen in einer raumlufttechnischen Anlage genügen soll, werden beispielsweise Mini Pleat Filterplatten verwendet. Eine Mini Pleat Filterplatte stellt eine Einheit bestehend aus dem Filterrahmen und dem darin angeordneten Filterpaket (Filterelement) dar, wobei bei Verschmutzung die Einheit als Ganzes ausgetauscht wird.

Bei dem erfindungsgemäßen System handelt es sich um ein endständiges System, das an ein Ende eines Lüftungskanals angeschlossen ist. Durch das erfindungsgemäße System wird die Abnahmeprüfung erleichtert, da das Filterelement auf seiner kompletten Oberfläche vom Raum her problemlos abgescannt werden kann. Im Übrigen wird durch die werkzeuglose Betätigung die Montage und die Demontage erleichtert.

Zumindest eine Einrichtung kann beispielsweise als Exzenterhebel ausgebildet sein. Zum Spannen, d. h. zur Verlagerung der Einrichtung aus ihrer Entnahmeposition in ihre Fixierposition, muss der Exzenterhebel lediglich verlagert werden, so dass damit in Abhängigkeit von der Größe des gewählten Exzenters durch einen kurzen Verlagerungsweg der Filterrahmen in die gewünschte Einsatzposition verlagert werden kann.

Selbstverständlich sind auch andere Ausgestaltungen an Einrichtungen denkbar. So kann die Einrichtung beispielsweise als Stift, der um seine Längsachse drehbar gelagert ist, ausgebildet sein, wobei der Stift in seiner Oberfläche eine in axialer Richtung schraubenförmig verlaufende, von außen zugängliche Ausnehmung aufweist. In der Ausnehmung ist ein Bolzen geführt, der beispielsweise seitlich überstehend an dem Filterrahmen befestigt ist. Bei Verdrehen des Stiftes wird der Bolzen in der Ausnehmung verlagert, so dass hierdurch eine Verlagerung des Filterrahmens gegenüber dem Halterahmen bewirkt wird.

Zumindest eine Einrichtung ist um eine Drehachse drehbar gelagert, wobei die Drehachse parallel zur Einführrichtung ausgerichtet ist und die Einrichtung an dem Halterahmen, insbesondere an der Anlagefläche des Halterahmens, angebracht ist, und die Einrichtung kann auf ihrer der Anlagefläche zugewandten Seite eine in axialer Richtung der Drehachse gesehen schraubenförmig verlaufend ausgebildete Kontaktfläche aufweisen. Bei einer solchen Ausführungsform verläuft die Kontaktfläche in axialer Richtung der Drehachse der Einrichtung gesehen schräg. Daraus resultiert eine maximale Verdrehung zwischen der Fixierposition und der Entnahmeposition von weniger als 360°.

Zumindest eine Einrichtung kann einen Querschnitt in Form eines Kreissegmentes haben.

Dabei bietet es sich an, wenn die Drehachse der Einrichtung im Bereich der Kreissehne oder des theoretischen Kreismittelpunktes angeordnet ist.

Zumindest eine Einrichtung kann wenigstens einen Anschlag zur Begrenzung der Drehbewegung in zumindest einer Drehrichtung aufweisen. Vorzugsweise weist die Einrichtung zwei Anschläge auf, so dass der Verdrehweg in beide Drehrichtungen beschränkt ist.

Zumindest eine Einrichtung kann einen Aufnahmebereich für ein Werkzeug, insbesondere einen als Innensechskant ausgebildeten Aufnahmebereich, aufweisen. Selbstverständlich sind auch anders ausgebildete Aufnahmebereiche, beispielsweise ein Schlitz zur Aufnahme eines Schraubendrehers oder ein Außensechskant zum Ansetzen eines Schraubenschlüssels, möglich.

Der Halterahmen kann eckig, insbesondere viereckig, ausgebildet sein. Eine viereckige Ausgestaltung eignet sich insbesondere zum Anschluss eines viereckigen Kanals.

Der Filterrahmen kann in seiner Einsatzposition an dem Halterahmen eng anliegen, insbesondere durch eine im Kontaktbereich von dem Halterahmen und dem Filterrahmen vorgesehene Dichtung gegenüber dem Halterahmen abgedichtet sein. Als Dichtung kann jede für den beabsichtigten Anwendungsfall geeignete Dichtung verwendet werden.

Sofern das System beispielsweise in Reinräumen eingesetzt wird, bietet es sich an, wenn der Filterrahmen eine nach außen weisende umlaufende Rinne mit einer darin vorgesehenen Fluiddichtung aufweist und der Halterahmen einen in der Einsatzposition des Filterrahmens in die Fluiddichtung eintauchenden umlaufenden Steg aufweist.

Es bietet sich an, wenn dem Filterelement, insbesondere auf seiner dem Raum zugewandten Seite, ein Griffschutz zugeordnet ist. Bei dem Griffschutz kann es sich beispielsweise um ein sich über das ganze Filterelement erstreckendes Gitter handeln.

Zumindest eine Einrichtung kann aus Kunststoff bestehen, wobei auch andere Materialien, wie beispielsweise Metall, denkbar sind.

Im Folgenden wird ein in der Zeichnung dargestelltes Ausführungsbeispiel der Erfindung erläutert. Es zeigen:
- Fig. 1: eine Draufsicht auf einen Teilbereich eines in einem Halterahmen fixierten Filterrahmens mit einem darin angeordneten Filterelement,
- Fig. 2: das Detail "X" aus Fig. 1, wobei sich die Einrichtung in ihrer Fixierposition befindet,
- Fig. 3: das Detail "X" aus Fig. 1, wobei sich die Einrichtung in ihrer Entnahmeposition befindet,
- Fig. 4: den Gegenstand nach Fig. 2 in der Draufsicht,
- Fig. 5: den Gegenstand nach Fig. 3 in der Draufsicht,
- Fig. 6: einen Schnitt in Richtung VI -VI durch den Gegenstand nach Fig. 1, wobei sich die Einrichtung in ihrer Fixierposition befindet, und
- Fig. 7: einen Schnitt in Richtung VI -VI durch den Gegenstand nach Fig. 1, wobei sich die Einrichtung in ihrer Entnahmeposition befindet.

In allen Figuren werden für gleiche bzw. gleichartige Bauteile übereinstimmende Bezugszeichen verwendet.

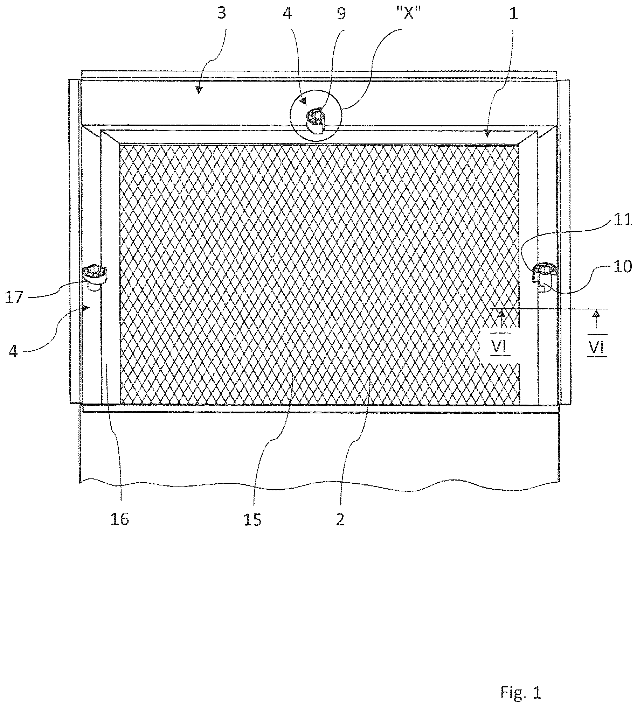

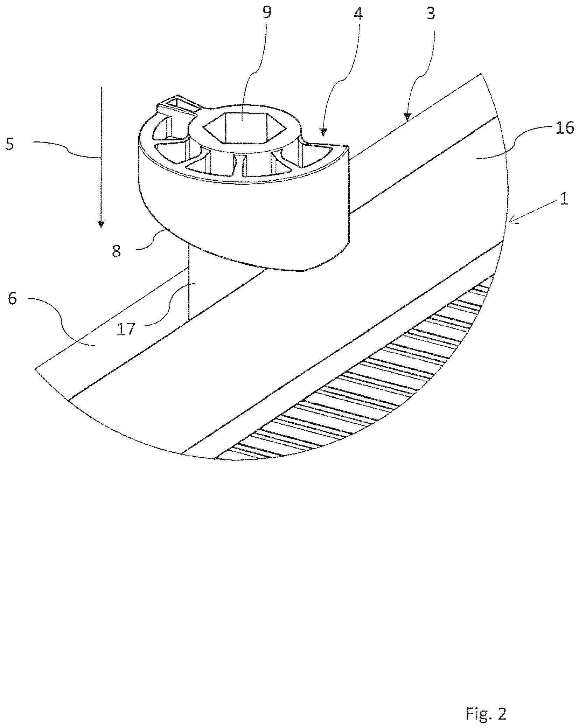

Die Fig. 1 bis 7 zeigen ein System, das einen Filterrahmen 1 mit einem darin angeordneten Filterelement 2, einen Halterahmen 3 zur reversiblen Aufnahme des Filterrahmens 1 sowie vier über den Umfang des Filterrahmens 1 verteilt angeordnete Einrichtungen 4 umfasst. Der Halterahmen 3 ist viereckig ausgebildet, wobei sich auf jeder der vier Seiten des zu fixierenden Filterrahmens 1 eine Einrichtung 4 befindet.

Der Filterrahmen 1 wird durch die vier Einrichtungen 4 entgegen der Einführrichtung 5 gegenüber dem Halterahmen 3 fixiert. Der Halterahmen 3 weist hierzu eine nach innen weisende, umlaufende Anlagefläche 6 auf, an der der Filterrahmen 1 im eingesetzten Zustand anliegt. In dem dargestellten Ausführungsbeispiel ist in dem Filterrahmen 1 als Filterelement 2 eine Mini Pleat Filterplatte vorgesehen, die als Vor- oder auch als Endfilter zur Abscheidung von Feinstaub oder als Schwebstofffilter für höchste Anforderungen in raumlufttechnischen Anlagen dient.

Jede Einrichtung 4, die beispielsweise aus einem Kunststoff bestehen kann, ist um eine Drehachse 7 drehbar gelagert, wobei die Drehachse 7 parallel zur Einführrichtung 5 ausgerichtet und in dem dargestellten Ausführungsbeispiel an der Anlagefläche 6 des Halterahmens 3 angebracht ist. Jede Einrichtung 4 weist auf ihrer der Anlagefläche 6 zugewandten Seite eine in axialer Richtung der Drehachse 7 gesehen schraubenförmig verlaufend ausgebildete Kontaktfläche 8 auf.

Jede Einrichtung 4 ist zwischen einer Entnahmeposition und einer Fixierposition verlagerbar, wobei bei Verlagerung der Einrichtung 4 aus ihrer Entnahmeposition in ihre Fixierposition durch die schraubenförmig verlaufend ausgebildete Kontaktfläche 8 der Filterrahmen 1 zunehmend in seine Einsatzposition gegen die Anlagefläche 6 verlagert wird. Die schraubenförmig verlaufend ausgebildete Kontaktfläche 8 wirkt dabei mit der der Anlagefläche 6 des Halterahmens 3 abgewandten Fläche des Filterrahmens 1 zusammen.

Für die werkzeuglose Betätigung ist jede Einrichtung 4 mit Handhabungsmitteln versehen, die in dem dargestellten Ausführungsbeispiel durch die Form der Einrichtung selbst begründet sind, so dass jede Einrichtung 4 einfach mit den Fingern ergriffen und verdreht werden kann. Jede Einrichtung 4 weist zusätzlich auf ihrer der in Einführrichtung gesehen hinteren Oberfläche einen Aufnahmebereich 9 für ein Werkzeug auf. In dem vorliegenden Ausführungsbeispiel ist der Aufnahmebereich 9 als Innensechskant ausgebildet.

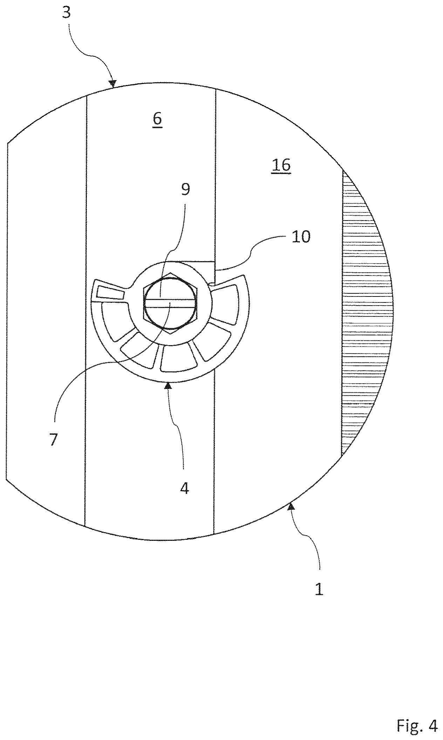

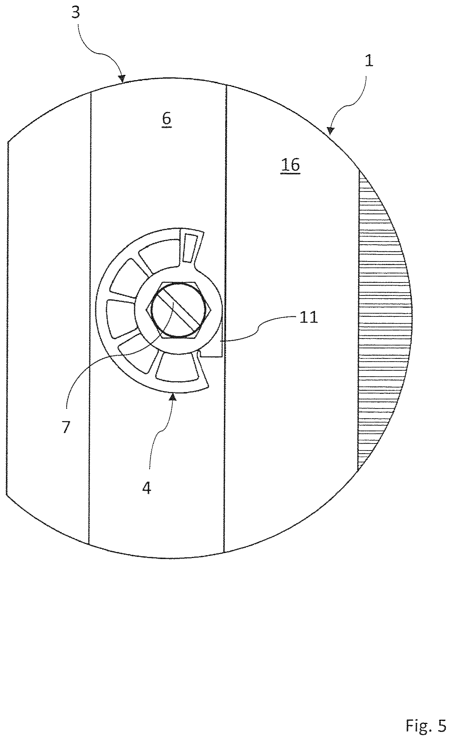

Wie den Figuren zu entnehmen ist, weist jede Einrichtung 4 in der Draufsicht gesehen, sowie sie beispielsweise in den Fig. 4 und 5 gesehen, einen Querschnitt in Form eines Kreissegments auf. Die Drehachse 7 jeder Einrichtung 4 liegt in den dargestellten Ausführungsbeispielen etwa im theoretischen Kreismittelpunkt. Jede Einrichtung 4 weist dabei zwei Anschläge 10, 11 zur Begrenzung der Drehbewegung einmal in der Fixierposition und einmal in der Entnahmeposition auf.

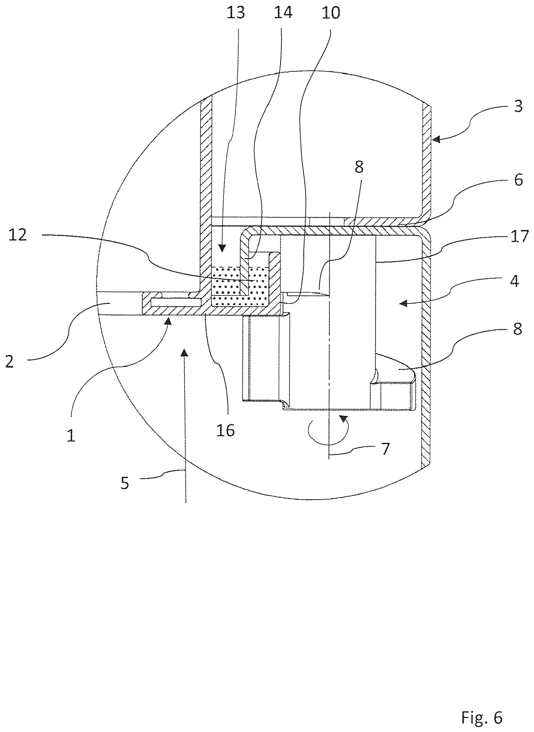

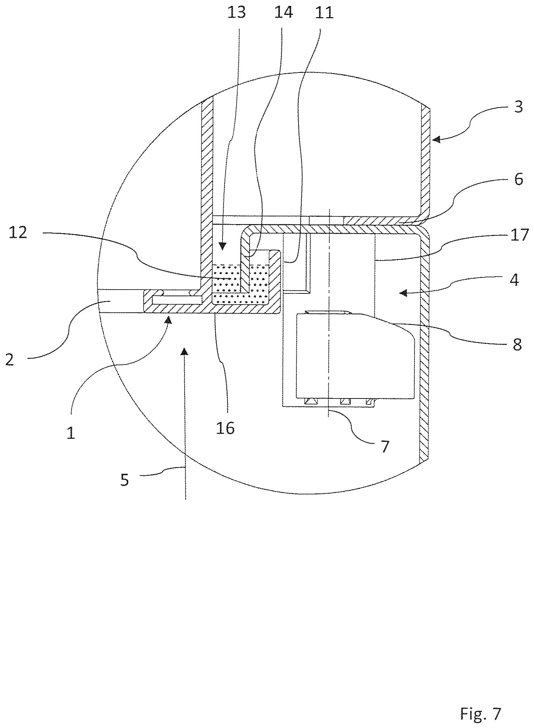

In der Einsatzposition liegt der Filterrahmen 1 eng an dem Halterahmen 3 an, wobei in dem dargestellten Ausführungsbeispiel der Filterrahmen 1 an der Anlagefläche 6 des Halterahmens 3 anliegt. In den Figuren 6 und 7 ist ein Ausführungsbeispiel dargestellt, das sich beispielsweise zur Verwendung in Reinräumen, wie Operationsräumen, anbietet. Hier ist im Kontaktbereich von dem Halterahmen 3 und dem Filterrahmen 1 eine Dichtung, die in dem dargestellten Ausführungsbeispiel als Fluiddichtung 12 ausgebildet ist, vorgesehen, so dass der Filterrahmen 1 gegenüber dem Halterahmen 3 abgedichtet ist.

Hierzu weist der Filterrahmen 1 eine nach außen weisende umlaufende Rinne 13 auf, in der die Fluiddichtung 12 vorgesehen ist. An dem Halterahmen 3 ist ein in der Einsatzposition des Filterrahmens 1 in die Fluiddichtung 12 eintauchender umlaufender Steg 14 vorgesehen. Ein entsprechend abgedichtetes System ist für höchste Anforderungen in Bezug auf die Luftreinheit und in Bezug auf die Keimfreiheit ausgelegt.

Wie beispielsweise in Fig. 1 dargestellt, weist das Filterelement 2 auf seiner dem Raum zugewandten Seite einen Griffschutz auf, der in dem dargestellten Ausführungsbeispiel als Gitter 15 ausgebildet ist. Die in dem Gitter 15 befindlichen Öffnungen erlauben ein Durchströmen des Filterelementes 2.

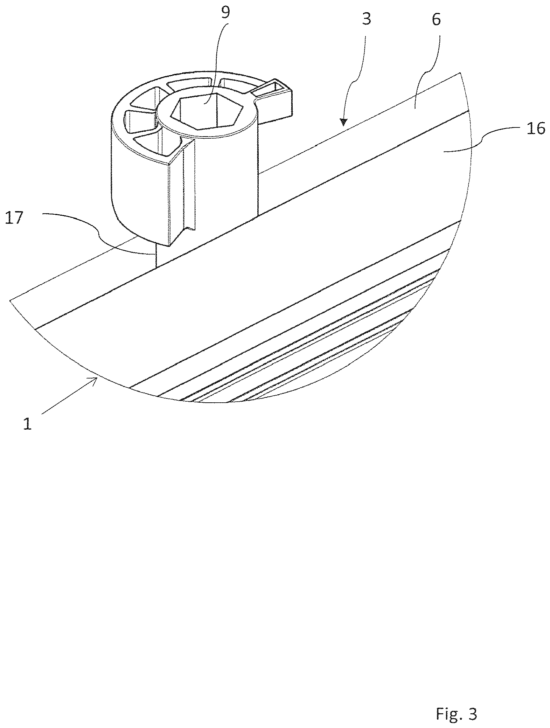

Wie den Zeichnungen zu entnehmen ist, werden die vier Einrichtungen 4 für ein Einführen des Filterrahmens 1 zunächst in ihre jeweilige Entnahmeposition gebracht, die in Fig. 3 dargestellt ist. In der Entnahmeposition kann der Filterrahmen 1 aufgrund der kreissegmentartigen Ausgestaltung der Einrichtungen 4 in den Halterahmen 3 in Einführrichtung 5 gesehen eingeführt werden. Sofern eine Fluiddichtung 12 vorgesehen ist, berührt der umlaufende Steg 14 die Fluiddichtung 12.

Bei Verdrehen jeder Einrichtung 4 aus ihrer Entnahmeposition in ihre Fixierposition wirkt die schraubenförmig verlaufend ausgebildete Kontaktfläche 8 jeder Einrichtung 4 mit der der Anlagefläche 6 abgewandten Fläche 16 des Filterrahmens 1 zusammen. Mit zunehmendem Verdrehen wird der Filterrahmen 1 in seine Einsatzposition verlagert. Im Falle einer Fluiddichtung 12 taucht der umlaufende Steg 14 in die Fluiddichtung 12 ein.

Zur Begrenzung des Verdrehweges aus ihrer Entnahmeposition in ihre Fixierposition ist bei jeder Einrichtung 4 ein Anschlag 10 vorgesehen. Weiterhin weist jede Einrichtung 4 einen Anschlag 11 zur Begrenzung des Verdrehweges aus der Fixierposition in ihre Entnahmeposition auf. Beide Anschläge 10, 11 sind in einem rechten Winkel zueinander angeordnet, so dass bei dem dargestellten Ausführungsbeispiel ein maximaler Verdrehweg von 270° resultiert. Durch beide Anschläge 10, 11 sind jeweils die Entnahmeposition und die Fixierposition definiert.

Bei dem dargestellten Ausführungsbeispiel dient der Bereich 17 einer jeden Einrichtung 4, der sich zwischen dem der Anlagefläche 6 zugewandten Ende und der schraubenförmig verlaufend ausgebildete Kontaktfläche 8 erstreckt, als Zentrierhilfe, so dass der Filterrahmen 1 beim Einsetzen automatisch durch die vier Bereiche 17 ausgerichtet wird. Jeder Bereich 17 ist zylindrisch zur Drehachse 7 ausgerichtet.

## Patentansprüche

1. System, umfassend einen Filterrahmen (1) mit einem darin angeordneten Filterelement (2), einen Halterahmen (3) zur reversiblen Aufnahme des Filterrahmens (1) sowie zumindest zwei über den Umfang des Filterrahmens (1) verteilt angeordnete Einrichtungen (4), die den Filterrahmen (1) entgegen der Einführrichtung (5) gegenüber dem Halterahmen (3) fixieren, wobei der Halterahmen (3) eine, insbesondere nach innen weisende, umlaufende Anlagefläche (6) aufweist, an der der Filterrahmen (1) im eingesetzten Zustand anliegt, wobei wenigstens eine Einrichtung (4) zumindest werkzeuglos zwischen einer Entnahmeposition und einer Fixierposition verlagerbar ist und dass bei Verlagerung der Einrichtung (4) aus der Entnahmeposition in ihre Fixierposition der Filterrahmen (1) durch die Einrichtung (4) zunehmend in eine Einsatzposition gegen die Anlagefläche (6) verlagert wird, wobei die Einrichtung (4) für die werkzeuglose Betätigung mit Handhabungsmitteln versehen ist und dass zumindest eine Einrichtung (4) um eine Drehachse (7) drehbar gelagert ist, wobei die Drehachse (7) parallel zur Einführrichtung (5) ausgerichtet ist, **dadurch gekennzeichnet, dass** die Einrichtung (4) an dem Halterahmen (3) angebracht ist, und dass die Einrichtung (4) auf ihrer der Anlagefläche (6) zugewandten Seite eine in axialer Richtung der Drehachse (7) gesehen schraubenförmig verlaufend ausgebildete Kontaktfläche (8) aufweist.

2. System nach dem vorhergehenden Anspruch, **dadurch gekennzeichnet, dass** zumindest eine Einrichtung (4) einen Querschnitt in Form eines Kreissegmentes hat.

3. System nach dem vorhergehenden Anspruch, **dadurch gekennzeichnet, dass** die Drehachse (7) im Bereich der Kreissehne oder des theoretischen Kreismittelpunktes angeordnet ist.

4. System nach einem der Ansprüche 1 bis 3, **dadurch gekennzeichnet, dass** zumindest eine Einrichtung (4) wenigstens einen Anschlag (10, 11) zur Begrenzung der Drehbewegung in zumindest einer Drehrichtung aufweist.

5. System nach einem der vorhergehenden Ansprüche, **dadurch gekennzeichnet, dass** zumindest eine Einrichtung (4) einen Aufnahmebereich (9) für ein Werkzeug, insbesondere einen als Innensechskant ausgebildeten Aufnahmebereich (9), aufweist.

6. System nach einem der vorhergehenden Ansprüche, **dadurch gekennzeichnet, dass** der Halterahmen (3) eckig, insbesondere viereckig, ausgebildet ist.

7. System nach einem der vorhergehenden Ansprüche, **dadurch gekennzeichnet, dass** der Filterrahmen (1) in seiner Einsatzposition an dem Halterahmen (3) eng anliegt, insbesondere durch eine im Kontaktbereich von dem Halterahmen (3) und dem Filterrahmen (1) vorgesehene Dichtung gegenüber dem Halterahmen (3) abgedichtet ist.

8. System nach einem der vorhergehenden Ansprüche, **dadurch gekennzeichnet, dass** der Filterrahmen (1) eine nach außen weisende umlaufende Rinne (13) mit einer darin vorgesehenen Fluiddichtung (12) aufweist und dass der Halterahmen (3) einen in der Einsatzposition des Filterrahmens (1) in die Fluiddichtung (12) eintauchenden umlaufenden Steg (14) aufweist.

9. System nach einem der vorhergehenden Ansprüche, **dadurch gekennzeichnet, dass** dem Filterelement (2), insbesondere auf seiner dem Raum zugewandten Seite, ein Griffschutz zugeordnet ist.

10. System nach einem der vorhergehenden Ansprüche, **dadurch gekennzeichnet, dass** zumindest eine Einrichtung (4) aus Kunststoff besteht.

## Claims

1. System comprising a filter frame (1) with a filter element (2) arranged therein, a supporting frame (3) for the reversible mounting of the filter frame (1), and at least two devices (4) arranged distributed over the circumference of the filter frame (1), which fix the filter frame (1) against the introduction direction (5) against the supporting frame (3), wherein the supporting frame (3) comprises a circumferential contact surface (6), facing inwards, which in the engaged state is in contact with the filter frame (1), wherein at least one device (4) is movable without the need for tools between a removal position and a fixing position, and, when the device (4) is moved out of the removal position into its fixing position, the filter frame (1) is moved increasingly into an engagement position against the contact surface (6) by the device (4), wherein the device (4) is provided with handling means for actuation without the need for tools, and at least one device (4) is rotatably mounted around an axis of rotation (7), wherein the axis of rotation (7) is aligned parallel to the introduction direction (5), **characterised in that** the device (4) is located on the supporting frame (3), and that the device (4) comprises, on its side facing the contact surface (6), seen in the direction of the axis of rotation (7), a contact surface (8) configured such as to run in helical fashion.

2. System according to the preceding claim, **characterised in that** at least one device (4) has a cross-section in the form of a circular segment.

3. System according to the preceding claim, **characterised in that** the axis of rotation (7) is arranged in the region of the chord of the circle or of the theoretical centre of the circle.

4. System according to any one of claims 1 to 3, **characterised in that** at least one device (4) comprises at least one stop (10, 11) for limiting the rotational movement in at least one direction of rotation.

5. System according to any one of the preceding claims, **characterised in that** at least one device (4) comprises an accommodation region (9) for a tool, in particular an accommodation region (9) configured as a hexagonal socket.

6. System according to any one of the preceding claims, **characterised in that** the supporting frame (3) is configured with corners, in particular with four corners.

7. System according to any one of the preceding claims, **characterised in that** the filter frame (1) in its inserted position is in close contact with the supporting frame (3), and in particular is sealed against the supporting frame (3) by a seal provided in the contact region of the supporting frame (3) and the filter frame (1).

8. System according to any one of the preceding claims, **characterised in that** the filter frame (1) comprises a circumferential channel (13), facing outwards, with a fluid seal (12) provided therein, and that the supporting frame (3) comprises a circumferential web (14) which in the engaged position of the filter frame (1) is immersed into the fluid seal (12).

9. System according to any one of the preceding claims, **characterised in that** a contact protection device is arranged at the filter element (2), in particular on its side facing towards the surrounding area.

10. System according to any one of the preceding claims, **characterised in that** at least one device (4) consists of plastic.

## Revendications

1. Système, comprenant un cadre de filtre (1) dans lequel est disposé un élément filtrant (2), un cadre support (3) destiné à recevoir de manière réversible le cadre de filtre (1), et au moins deux dispositifs (4) disposés en étant répartis sur le pourtour du cadre de filtre (1), qui immobilisent le cadre de filtre (1) par rapport au cadre support (3) à l'encontre du sens d'introduction (5), sachant que le cadre support (3) présente une surface d'application périphérique (6), en particulier dirigée vers l'intérieur, contre laquelle le cadre de filtre (1) s'applique dans l'état inséré,
sachant qu'au moins un dispositif (4) peut être déplacé au moins sans outil entre une position d'enlèvement et une position d'immobilisation et que, lors du déplacement du dispositif (4) de la position d'enlèvement dans la position d'immobilisation, le cadre de filtre (1) est progressivement déplacé par le dispositif (4) dans une position d'insertion contre la surface d'application (6),
sachant que le dispositif (4) est prévu pour un actionnement sans outil par des moyens de manipulation et qu'au moins un dispositif (4) est monté à rotation autour d'un axe de rotation (7), sachant que l'axe de rotation (7) est orienté parallèlement au sens d'introduction (5),
**caractérisé en ce que** le dispositif (4) est installé sur le cadre support (3), et **en ce que** le dispositif (4) présente, sur son côté tourné vers la surface d'application (6), une surface de contact (8) réalisée en s'étendant en forme d'hélice, considéré dans la direction axiale de l'axe de rotation (7).

2. Système selon la revendication précédente, **caractérisé en ce qu'**au moins un dispositif (4) présente une section sous la forme d'un segment de cercle.

3. Système selon la revendication précédente, **caractérisé en ce que** l'axe de rotation (7) est disposé dans la région de la corde du cercle ou du centre théorique du cercle.

4. Système selon l'une des revendications 1 à 3, **caractérisé en ce qu'**au moins un dispositif (4) présente au moins une butée (10, 11) pour limiter le mouvement de rotation dans au moins un sens de rotation.

5. Système selon l'une des revendications précédentes, **caractérisé en ce qu'**au moins un dispositif (4) présente une région réceptrice (9) pour un outil, en particulier une région réceptrice (9) réalisée sous forme de six pans creux.

6. Système selon l'une des revendications précédentes, **caractérisé en ce que** le cadre support (3) est réalisé polygonal, en particulier quadrangulaire.

7. Système selon l'une des revendications précédentes, **caractérisé en ce que** le cadre de filtre (1) s'applique étroitement dans sa position d'insertion contre le cadre support (3), en particulier est étanché par rapport au cadre support (3) par un joint d'étanchéité prévu dans la région du contact du cadre support (3) et du cadre de filtre (1).

8. Système selon l'une des revendications précédentes, **caractérisé en ce que** le cadre de filtre (1) présente une rainure périphérique (13) dirigée vers l'extérieur dans laquelle est prévu un joint (12) d'étanchéité aux fluides, et **en ce que** le cadre support (3) présente une nervure périphérique (14) qui s'enfonce dans le joint (12) d'étanchéité aux fluides dans la position d'insertion du cadre de fltre (1).

9. Système selon l'une des revendications précédentes, **caractérisé en ce qu'**une protection contre le toucher est associée à l'élément filtrant (2), en particulier sur son côté tourné vers le local.

10. Système selon l'une des revendications précédentes, **caractérisé en ce qu'**au moins un dispositif (4) est constitué de matière plastique.
